# EUROPEAN PATENT APPLICATION

(11) **EP 4 592 835 A1**
(43) Date of publication of application: **30.07.2025**
(21) Application number: 23867233.1
(22) Date of filing: 29.08.2023
(51) Int. Cl.: G06F 9/451

(54) **DISPLAY METHOD AND APPARATUS FOR CONVERSATION LIST, ELECTRONIC DEVICE, AND STORAGE MEDIUM**

(30) Priority: 22.09.2022 CN 202211161025
(71) Applicant: Beijing Zitiao Network Technology Co., Ltd., Beijing 100190 (CN)
(72) Inventor: GUO, Zetao, Beijing 100028 (CN); YANG, Weihuang, Beijing 100028 (CN)
(74) Representative: Dentons UK and Middle East LLP
(86) International application number: PCT/CN2023/115410
(87) International publication number: WO 2024/060942

(57) **Abstract**

A chat list display method and apparatus, an electronic device and a storage medium. The method includes: displaying a chat list in an unfolded state in a chat interface, where the chat list has at least one chat item displayed therein (S101); and in response to a first trigger operation for a first chat item in the chat list, displaying chat content of a first chat corresponding to the first chat item in the chat interface, and switching the chat list from the unfolded state to a folded state, where a display size of the chat list in the folded state is less than a display size of the chat list in the unfolded state (S102).

## Description

### CROSS-REFERENCE TO RELATED APPLICATION(S)

This application claims priority to Chinese Application No. 202211161025.0, filed in the China Patent Office on September 22, 2022, the disclosure of which is incorporated herein by reference in its entity.

### FIELD

Embodiments of the present disclosure relate to the technical field of computers, for example, relate to a chat list display method and apparatus, an electronic device and a storage medium.

### BACKGROUND

In the related art, when viewing a video, a current user may perform a chat with other users via a chat panel. However, in a chat mode in the related art, the operations of the current user for performing chats with different other users are relatively tedious, and thus cannot meet the requirements of a current user for quickly switching the other users to perform chats.

### SUMMARY

Embodiments of the present disclosure provide a chat list display method and apparatus, an electronic device and a storage medium, to simplify operations required for switching a user who performs a chat.

In a first aspect, an embodiment of the present disclosure provides a chat list display method, including: displaying a chat list in an unfolded state in a chat interface, wherein the chat list has at least one chat item displayed therein; and in response to a first trigger operation for a first chat item in the chat list, displaying chat content of a first chat corresponding to the first chat item in the chat interface, and switching the chat list from the unfolded state to a folded state, wherein a display size of the chat list in the folded state is less than a display size of the chat list in the unfolded state.

In a second aspect, an embodiment of the present disclosure further provides a chat list display apparatus, including: a list display module, configured to display a chat list in an unfolded state in a chat interface, wherein the chat list has at least one chat item displayed therein; and a list folding module, configured to: in response to a first trigger operation for a first chat item in the chat list, display chat content of a first chat corresponding to the first chat item in the chat interface, and switch the chat list from the unfolded state to a folded state, wherein a display size of the chat list in the folded state is less than a display size of the chat list in the unfolded state.

In a third aspect, an embodiment of the present disclosure further provides an electronic device, including: at least one processor, and a memory, configured to store at least one program, wherein when the at least one program is executed by the at least one processor, the at least one processor is caused to implement the chat list display method according to the embodiments of the present disclosure.

In a fourth aspect, an embodiment of the present disclosure further provides a computer-readable storage medium having a computer program stored thereon, wherein the program is executed by a processor to implement the chat list display method according to the embodiments of the present disclosure.

### BRIEF DESCRIPTION OF THE DRAWINGS

FIG. 1 is a schematic flowchart of a chat list display method provided in an embodiment of the present disclosure;
FIG. 2 is a schematic diagram of displaying a chat list provided in an embodiment of the present disclosure;
FIG. 3 is a schematic diagram of displaying another chat list provided in an embodiment of the present disclosure;
FIG. 4 is a schematic flowchart of another chat list display method provided in an embodiment of the present disclosure;
FIG. 5 is a schematic diagram of displaying a media content presentation page provided in an embodiment of the present disclosure;
FIG. 6 is a schematic diagram of displaying still another chat list provided in an embodiment of the present disclosure;
FIG. 7 is a schematic diagram of displaying a chat interface provided in an embodiment of the present disclosure;
FIG. 8 is a schematic diagram of displaying another chat interface provided in an embodiment of the present disclosure;
FIG. 9 is a structural block diagram of a chat list display apparatus provided in an embodiment of the present disclosure; and
FIG. 10 is a schematic structural diagram of an electronic device provided in an embodiment of the present disclosure.

### DETAILED DESCRIPTION OF EMBODIMENTS

Hereinafter, embodiments of the present disclosure will be described with reference to the drawings. Although some embodiments of the present disclosure have been illustrated in the drawings, it should be understood that the present disclosure may be implemented in various forms and should not be construed as being limited to the embodiments set forth herein; and rather, these embodiments are provided to help understand the present disclosure more thoroughly and completely.

It should be understood that, a plurality of steps recorded in method implementations of the present disclosure may be executed in different sequences and/or in parallel. In addition, the method implementations may include additional steps and/or omit executing the steps shown.

As used herein, the terms "include" and variations thereof are open-ended terms, i.e., "including, but not limited to". The term "based on" is "based, at least in part, on". The term "one embodiment" means "at least one embodiment", the term "another embodiment" means "at least one additional embodiment", and the term "some embodiments" means "at least some embodiments". Relevant definitions of other terms will be given in the following description.

It should be noted that, concepts such as "first" and "second" mentioned in the present disclosure are only intended to distinguish different apparatuses, modules or units, and are not intended to limit the sequence or interdependence of functions executed by these apparatuses, modules or units.

It should be noted that, the modifiers such as "one" and "more" mentioned in the present disclosure are intended to be illustrative and not restrictive, and those skilled in the art should understand that the modifiers should be interpreted as "one or more" unless the context clearly indicates otherwise.

The names of messages or information interacted between a plurality of apparatuses in the implementations of the present disclosure are for illustrative purposes only.

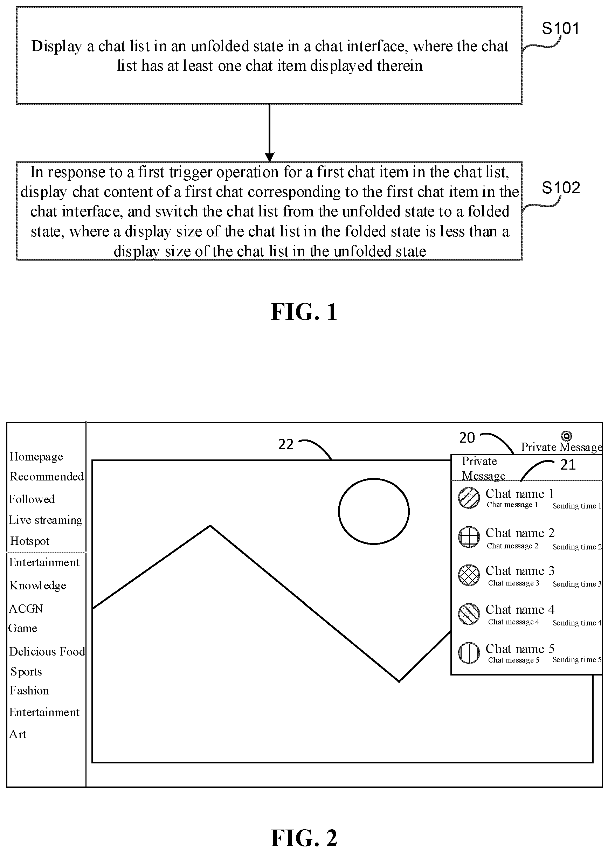

FIG. 1 is a schematic flowchart of a chat list display method provided in an embodiment of the present disclosure. The method may be executed by a chat list display apparatus, wherein the apparatus may be implemented by software and/or hardware, and may be configured in an electronic device, for example, may be configured in a computer device. The chat list display method provided in the embodiment of the present disclosure is applicable to a scenario in which a chat is performed with another user via a chat interface, for example, is applicable to a scenario in which a chat is performed with the other user via the chat interface while viewing media content. As shown in FIG. 1, the chat list display method provided in the present embodiment may include the following steps.

S101: displaying a chat list in an unfolded state in a chat interface, wherein the chat list has at least one chat item displayed therein.

The chat interface may be an interface for presenting chat-related content, for example, an interface for presenting a chat list and/or chat content. The chat interface may be an independent page, for example, a chat page, and may also be displayed in a media content presentation page. It is taken as an example below that the chat interface is displayed in the media content presentation page. The chat list may be understood as a chat message list, and one or more chat items may be displayed in the chat list. The chat item may be chat information of a corresponding chat, for example, an icon of the corresponding chat, a chat name, message content/a message digest of the last chat message in the chat, and/or a sending time of the last chat message in the corresponding chat, etc. Different chat items correspond to different chats, and the different chats correspond to different contacts of a current user and/or different chat groups in which the current user is located.

In the present embodiment, when the chat list is initially displayed, for example, when it is switched from a state of not displaying a chat interface 20 to a state of displaying the chat interface 20, a chat list 21 may be displayed in an unfolded state, and a chat item of at least one chat of the current user is displayed in the chat list 21, as shown in FIG. 2. At this time, there may be no chat content display area for displaying chat content in the chat interface 20.

S102: in response to a first trigger operation for a first chat item in the chat list, displaying chat content of a first chat corresponding to the first chat item in the chat interface, and switching the chat list from the unfolded state to a folded state, wherein a display size of the chat list in the folded state is less than a display size of the chat list in the unfolded state.

The first trigger operation may be an operation for triggering a chat item displayed in the chat list when the chat list is displayed in the chat interface in the unfolded state, for example, when the chat list is displayed in the chat interface in the unfolded state and there is no chat content display area for displaying chat content in the chat interface. The first chat item may be a chat item triggered by the first trigger operation. The first chat may be a chat corresponding to the first chat item. The chat content of one chat (for example, the first chat or a second chat) may be chat content in the chat, for example, a chat message sent by the current user in the chat and/or a chat message which is received by the current user in the chat and is sent by another user in the chat, etc.

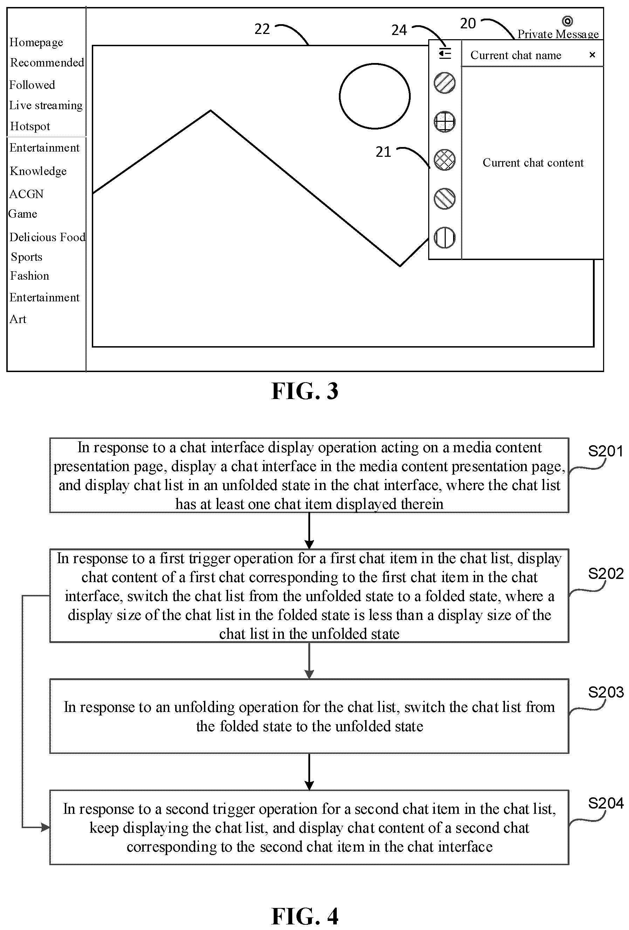

When the first trigger operation for a chat item (e.g., the first chat item) in the chat list 21 is received, the chat content of the chat corresponding to the chat item may be displayed in the chat interface 20, and the chat list 21 is switched from the unfolded state to the folded state, as shown in FIG. 3.

As shown in FIG. 2 and FIG. 3, in the present embodiment, the chat list 21 may have the unfolded state and the folded state. A display size of the chat list 21 in the folded state may be less than a display size of the chat list 21 in the unfolded state. The content included in the chat item when the chat list 21 is in the unfolded state may not be completely the same as the content included in the chat item when the chat list 21 is in the folded state. Optionally, when the chat list 21 is in the unfolded state, a first chat identifier, a second chat identifier, target chat information and sending time information of the target chat information of a chat corresponding to the chat item are displayed in the chat list 21; and when the chat list 21 is in the folded state, only the first chat identifier of the chat corresponding to the chat item is displayed in the chat list 21. The first chat identifier and the second chat identifier may be different identifiers of the chat, for example, the first chat identifier may be a chat icon, and the second chat identifier may be a chat name. The chat icon may be a picture identifier of the chat, which may include head portraits or other pictures of one or more users in the chat, for example, when the chat is a chat between the current user and one another user, the chat icon may be the head portrait of the other user; and when the chat is a chat group in which the current user is located, the chat icon may be an icon of the chat group. The target chat information may include one or more pieces of chat information in the chat, for example, the target chat information may be the last piece of chat information in the chat.

Exemplarily, as shown in FIG. 2 and FIG. 3, when the chat list 21 is in the unfolded state, the chat item of the chat may include the chat icon and the chat name of the chat, the message content of the last chat message in the chat, and the sending time information of the last chat message in the chat; when the chat list 21 is in the folded state, the chat item may only include the chat identifier of the chat, for example, the chat item only includes the chat icon of the chat, but does not include the chat name of the chat, the message content of the last chat message in the chat, and the sending time information of the last chat message in the chat.

In the present embodiment, the sorting manner of a plurality of chat items in the chat list may be flexibly set, for example, the plurality of chat items in the chat list may be sorted according to a sending time of the last chat message, a creation time of the chat, a time at which the current user views the chat content of the plurality of chats for the last time, or an arrangement sequence set by the current user, etc. When the chat items are sorted according to the sending time of the last chat message from late to early, if a new chat message is received in the corresponding chat or the current user sends a new chat message in the corresponding chat, the arrangement sequence of the chat items of the chat in the chat list may be correspondingly adjusted. When the chat list is in the unfolded state and when the chat list is in the folded state, the sorting manner of the plurality of chat items in the chat list may be the same or different, which is not limited in the present embodiment.

In the present embodiment, when the chat content is displayed, the chat list may be switched from the unfolded state to the folded state, so that the user can view the chat content of different chats by triggering the chat items in the chat list, without the need to switch the currently displayed chat content (i.e, the current chat content) by firstly closing the current chat content, then reopening the chat list and triggering the other chat items in the chat list. Compared with the technical solution of canceling displaying the chat list when displaying the chat content and the technical solution of still displaying the chat list in the unfolded state when displaying the chat content, operations required for viewing the chat content of different chats or switching the user who performs the chat can be simplified without causing excessive occlusion to other content in the page, thereby improving the user experience.

In some implementations, the chat content of the first chat corresponding to the first chat item may be displayed in a chat content display area (e.g., a first area) of the chat interface. At this time, optionally, displaying the chat content of the first chat corresponding to the first chat item in the chat interface includes: displaying the chat content of the first chat corresponding to the first chat item in a first area of the chat interface.

In the present embodiment, when the chat interface is initially displayed, the chat content display area for displaying the chat content may be present in the chat interface or not.

For example, when the chat interface is initially displayed, there may be the chat content display area for displaying the chat content in the chat interface. At this time, the chat content display area has no any chat content displayed therein. For example, the chat content display area may be a blank area, and the chat list may be displayed outside the chat content display area. Therefore, when the first trigger operation for the first chat item in the chat list is received, the chat content of the first chat corresponding to the first chat item may be directly displayed in the chat content display area.

In addition, as shown in FIG. 2, when the chat interface 20 is initially displayed, the chat list 21 may be directly displayed in a main display area of the chat interface 20. At this time, there may no chat content display area for displaying the chat content in the chat interface 20, thereby reducing the display size of the chat interface 20. In other words, the display of the chat list 21 may occupy the entire main display area of the chat interface 20. Therefore, when the first trigger operation for the first chat item in the chat list 21 is received, the chat content display area (i.e., the first area) may be created in the chat interface 20, and the chat content (i.e., the current chat content) of the first chat corresponding to the first chat item is displayed in the chat content display area, as shown in FIG. 3.

The first area may be a preset area for displaying the current chat content, that is, the chat content display area. A second area may be a preset area for displaying the chat list when the first area is present, that is, a chat list display area, which may be located on the left side, the right side, the upper side or the lower side of the first area, and there may be no overlapping area between the second area and the first area.

In the present embodiment, when the first area is created, the chat list may be controlled to move out of the first area, for example, the chat list is controlled to move towards the second area of the chat interface, to avoid the situation in which the chat list shields the chat content or the chat content shields the chat list. At this time, before the chat list is controlled to move towards the second area of the chat interface, during the process of controlling the chat list to move towards the second area of the chat interface, or after the chat list moves to the second area, the chat list is switched from the unfolded state to the folded state. Optionally, switching the chat list from the unfolded state to the folded state includes: controlling the chat list to move towards the second area of the chat interface, and switching the chat list from the unfolded state to the folded state during a moving process of the chat list. That is, during the process of controlling the chat list to move towards the second area of the chat interface, the chat list may be switched from the unfolded state to the folded state, for example, the display of chat identifiers in a plurality of chat items is kept, and the display of chat names in the plurality of chat items, the message content of the last chat message and the sending time of the last chat message is canceled.

In the present embodiment, if the chat list is switched from the unfolded state to the folded state during the process of controlling the chat list to move towards the second area, after the chat list moves to the second area, the chat list may be continued to be displayed in the folded state to avoid excessive occlusion to other content in the current page. At this time, optionally, the chat list display method provided in the present embodiment may further include: when the chat list moves to the second area, displaying the chat list in the folded state in the second area.

In addition, after receiving the first trigger operation for the first chat item in the chat list, the interface size of the chat interface may be adjusted or not, that is, before and after receiving the first trigger operation for the first chat item in the chat list, the interface size of the chat interface may be the same or different, which may be set according to actual situations.

In the chat list display method provided in the present embodiment, the chat list is displayed in the chat interface in the unfolded state, where the chat list has at least one chat item displayed therein; and in response to the first trigger operation for the first chat item in the chat list, the chat content of the first chat corresponding to the first chat item is displayed in the chat interface, and the chat list is switched from the unfolded state to the folded state, where the display size of the chat list in the folded state is less than the display size of the chat list in the unfolded state. In the present embodiment, by using the above technical solutions, when the chat content is displayed, the chat list is switched from the unfolded state to the folded state, so that the user can view the chat content of different chats by triggering the chat items in the chat list, and operations required for viewing the chat content of different chats or switching the user who performs the chat can be simplified without causing excessive occlusion to other content in the page, thereby improving the user experience.

FIG. 4 is a schematic flowchart of another chat list display method provided in an embodiment of the present disclosure. The solution in the present embodiment may be combined with one or more optional solutions in the above embodiments. Optionally, the method further includes: after switching the chat list from the unfolded state to the folded state, switching the chat list from the folded state to the unfolded state in response to an unfolding operation for the chat list.

Optionally, the chat list display method provided in the present embodiment further includes: in response to a second trigger operation for a second chat item in the chat list, keeping displaying the chat list, and displaying chat content of a second chat corresponding to the second chat item in the chat interface.

Optionally, displaying the chat list in the unfolded state in the chat interface includes: in response to a chat interface display operation acting on a media content presentation page, displaying the chat interface in the media content presentation page, and displaying the chat list in the unfolded state in the chat interface.

As shown in FIG. 4, the chat list display method provided in the present embodiment may include the following steps.

S201: in response to a chat interface display operation acting on a media content presentation page, displaying a chat interface in the media content presentation page, and displaying a chat list in an unfolded state in the chat interface, where the chat list has at least one chat item displayed therein.

The media content presentation page may be a page for presenting media content, which may be a client page or a web page. The media content may be, for example, video content or image-text content, etc. The chat interface display operation may be an operation for instructing to display the chat interface, for example, an operation for triggering a chat control displayed in the media content presentation page.

In the present embodiment, the current user may perform a chat with another user via the chat interface while viewing the media content in the media content presentation page, thereby meeting the media content viewing requirement and the chat requirement of the user at the same time.

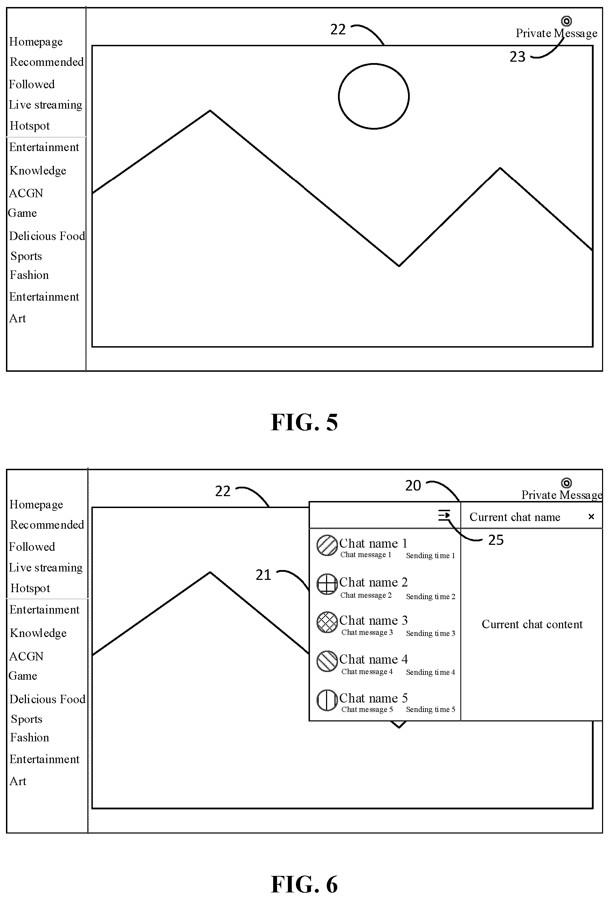

As shown in FIG. 5, the current application program may display the media content presentation page, display a media content picture 22 of the current media content on the media content presentation page, and display a chat control 23 (e.g., a private message control, and the like). Therefore, when wanting to view or send a chat message, the current user may trigger the chat control 23. When detecting that the user triggers the chat control 23 displayed in the media content presentation page, the current application program may determine that a chat interface display operation is received, display the chat interface 20 in the media content presentation page in response to the chat interface display operation, and display the chat list 21 of the current user in the unfolded state in the chat interface 20, as shown in FIG. 2.

In the present embodiment, the display mode of the chat interface may be flexibly set, for example, the chat interface may be directly displayed on an upper layer of the media content picture of the current media content displayed in the media content presentation page; and the chat interface may also be displayed in a preset area of the media content presentation page, and a display range of a media content presentation area in the media content presentation page is adjusted according to a display range (e.g., a display position and/or a display size, and the like) of the chat interface, that is, the display range of the media content picture displayed in the media content presentation page is adjusted according to the display range of the chat interface to display the media content picture outside the preset area. At this time, optionally, displaying the chat interface in the media content presentation page includes: displaying the chat interface on the upper layer of the media content picture displayed in the media content presentation page; or displaying the chat interface in the media content presentation page, and adjusting, according to the display range of the chat interface, the display range of the media content picture displayed in the media content presentation page.

S202: in response to a first trigger operation for a first chat item in the chat list, displaying chat content of a first chat corresponding to the first chat item in the chat interface, switching the chat list from the unfolded state to a folded state, and executing S203 or S204, where a display size of the chat list in the folded state is less than a display size of the chat list in the unfolded state.

S203: in response to an unfolding operation for the chat list, switching the chat list from the folded state to the unfolded state.

The unfolding operation may be a trigger operation for instructing to switch the chat list from the folded state to the unfolded state, for example, an operation for triggering a folding control displayed in the chat interface, or an operation for moving an input control indicator (e.g., a cursor) into the chat list display area (e.g., the second area).

In the present embodiment, when the unfolding operation for the chat list 21 is received, the chat list 21 may be switched from the folded state to the unfolded state, as shown in FIG. 6, so that the user can conveniently view complete information of the plurality of chat items.

In some implementations, as shown in FIG. 3, when the chat list 21 is displayed in the folded state, an unfolding control 24 of the chat list 21 may be displayed in the chat interface 20 (e.g., in the chat list display area). Therefore, when it is detected that the user triggers the unfolding control 24, it may be determined that an unfolding operation for the chat list 21 is received, and in response to the unfolding operation, the chat list 21 is switched from the folded state to the unfolded state, and the unfolding control 24 may be further switched and displayed as a folding control 25, as shown in FIG. 6, so that the user instructs, by triggering the folding control 25, the current application program to re-switch the chat list 21 from the unfolded state to the folded state.

In some implementations, when the input control indicator is located in the chat list display area, the chat list may be displayed in the unfolded state; and when the input control indicator is located outside the chat list display area, the chat list may be displayed in the folded state. For example, when it is detected that the input control indicator moves from the outside of the chat list display area to the interior of the chat list display area, the chat list may be switched from the folded state to the unfolded state; and when it is detected that the input control indicator moves from the interior of the chat list display area to the outside of the chat list display area, the chat list may be switched from the unfolded state to the folded state.

In some implementations, when the chat list is displayed in the folded state, the unfolding control of the chat list may be displayed in the chat interface. At this time, when it is detected that the input control indicator moves from the outside of the chat list display area to the interior of the chat list display area, the chat list may be switched from the folded state to the unfolded state; when it is detected that the input control indicator moves from the interior of the chat list display area to the outside of the chat list display area, the chat list may be switched from the unfolded state to the folded state; and when it is detected that the user triggers the unfolding control of the chat list, the chat interface may be displayed in the unfolded state, and the unfolding control is switched and displayed as the folding control. After the user instructs, by triggering the unfolding control, to display the chat interface as the unfolded state, regardless of whether the input control indicator is located in the chat list display area, the chat list may be displayed in the unfolded state until it is detected that the user triggers the folding control of the chat list.

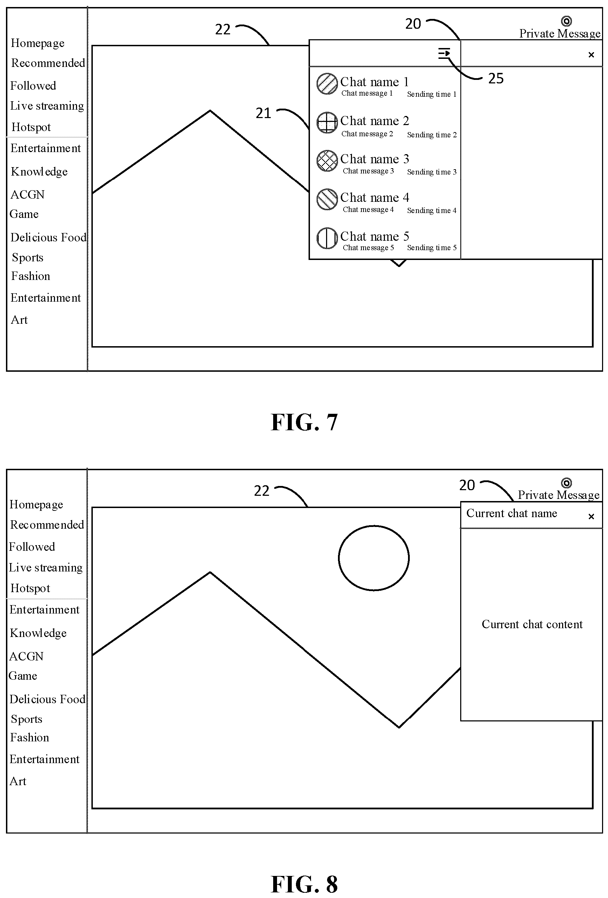

In the present embodiment, when the chat list 21 is switched from the folded state to the unfolded state in response to the unfolding operation of the current user for the chat list 21, the display of the current chat content (e.g., the chat content of the first chat) displayed in the chat interface 20 may be kept, as shown in FIG. 6, the display of the current chat content displayed in the display chat interface 20 may also be canceled, for example, the display of the chat content display area (e.g., the first area) is kept, and the display of the current chat content in the chat content display area is canceled, as shown in FIG. 7; or the display of the display chat content display area is canceled, for example, the chat interface 20 is switched to a display style before the first trigger operation for the first chat item in the chat list 21 is received, as shown in FIG. 2.

At this time, optionally, switching the chat list from the folded state to the unfolded state includes: switching the chat list from the folded state to the unfolded state, and keeping displaying a current chat content displayed in the chat interface; or switching the chat list from the folded state to the unfolded state, and canceling displaying a current chat content displayed in the chat interface. It is taken as an example for description that the display of the current chat content in the chat interface is kept.

S204: in response to a second trigger operation for a second chat item in the chat list, keeping displaying the chat list, and displaying chat content of a second chat corresponding to the second chat item in the chat interface.

The second trigger operation may be an operation for triggering one chat item displayed in the chat list when there is the chat content display area for displaying the chat content in the chat interface, for example, when the chat content of one chat is displayed in the chat content display area of the chat interface. The second chat item may be a chat item triggered by the second trigger operation, which may be the same or different chat items as the first chat item. The second chat may be a chat corresponding to the second chat item.

In the present embodiment, regardless of whether the chat list is in the folded state or the unfolded state, the current user may view, by triggering one chat item in the chat list, the chat content of the chat corresponding to the chat item triggered by the current user, thereby simplifying the operations required by the user when switching to view the chat content of different chats.

In response to there being the chat content display area in the chat interface, when it is detected that the user triggers the second trigger operation for one chat item in the chat list, the display of the chat list may be kept, and the chat content of the chat corresponding to the chat item triggered by the current user is displayed in the chat content display area of the chat interface.

Exemplarily, when the display of the chat list is kept, the display state (e.g., the unfolded state or the folded state) of the chat list may be kept unchanged, that is, the chat list is continuously displayed in the display state of the chat list before the second trigger operation is received; and the chat list may also be displayed in a preset display state, for example, the chat list is directly displayed in the unfolded state/the folded state without considering the display state of the chat list before the second trigger operation is received.

When the chat content of the second chat is displayed in the chat interface, if no chat content is displayed in the chat content display area before the second trigger operation is received, the chat content of the second chat may be directly displayed in the chat content display area; if the chat content of the second chat is displayed in the chat content display area before the second trigger operation is received, the display of the chat content of the second chat may be continued in the chat content display area; and if the chat content of other chat (e.g., the first chat, and the like) other than the second chat is displayed in the chat content display area before the second trigger operation is received, the current chat content displayed in the chat content display area may be switched to be the chat content of the second chat.

In some implementations, the chat list display method provided in the present embodiment further includes: in response to a display cancel operation for the chat list, canceling displaying the chat list, and keeping displaying a current chat content displayed in the chat interface; and/or, in response to a list display operation for the chat list, re-displaying the chat list, and keeping displaying a current chat content displayed in the chat interface.

The display cancel operation may be a trigger operation for instructing to cancel displaying the chat list when the chat content is displayed, for example, an operation for triggering a closing control of the chat list, and the like. The list display operation may be a trigger operation for instructing to re-display the chat list when the chat content is displayed, for example, an operation for triggering a display control of the chat list, and the like. The current chat content may be chat content currently displayed in the chat interface.

Exemplarily, as shown in FIG. 3 and FIG. 6, the chat content of one chat and the situations of the chat list 21 are displayed in the chat interface 20 at the same time. For example, in response to the chat content of one chat being displayed in the chat interface 20 and the chat list 21 being displayed in the unfolded state or the folded state, when the display cancel operation for the chat list 21 is received, for example, when it is detected that the current user triggers the closing control (not shown in the figure) of the chat list 21, the display of the chat list 21 may be canceled, and the display of the current chat content displayed in the display chat interface 20 may be kept, as shown in FIG. 8, to further reduce the influence of the chat interface 20 on the presentation of other content (e.g., the media content picture) in the page.

In addition, as shown in FIG. 8, in response to the chat content of one chat being displayed in the chat interface 20 and the chat list 21 being not displayed, when the list display operation for the chat list 21 is received, for example, when it is detected that the current user triggers a display control (not shown in the figure) of the chat list 21, the chat list 21 may be re-displayed, for example, the chat list 21 is re-displayed in the display state in which the chat list 21 is located before the display of the chat list 21 is canceled or the chat list 21 is re-displayed in a preset display state (e.g., the folded state or the unfolded state), and the display of the current chat content displayed in the display chat interface is kept, as shown in FIG. 3 and FIG. 6, so that the user can conveniently switch and view the chat content of different chats.

By using the chat list display method provided in the present embodiment, when viewing the media content, the user can switch the display state of the chat list and switch and view the chat content of different chats as needed, so that diversified chat interface display modes can be provided, and meanwhile, the media content viewing requirement, the chat list viewing requirement and the chat content switching requirement of the user are met, thereby improving the user experience.

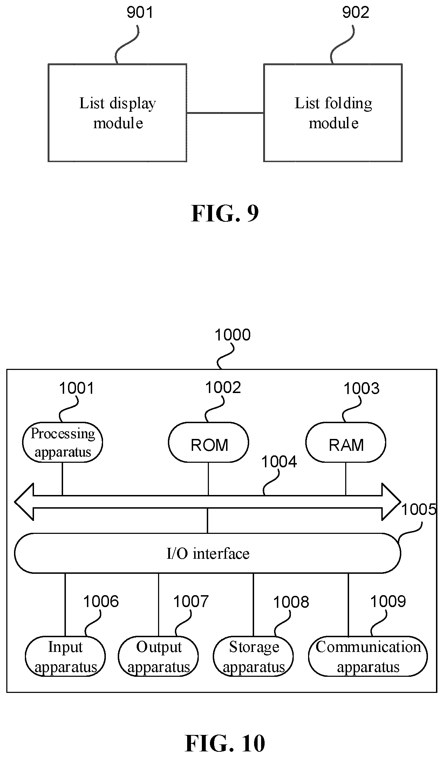

FIG. 9 is a structural block diagram of a chat list display apparatus provided in an embodiment of the present disclosure. The apparatus may be implemented by software and/or hardware, may be configured in an electronic device, for example, may be configured in a computer device, and may perform a chat with another user based on a chat interface by executing a display method of the chat interface. As shown in FIG. 9, the chat list display apparatus provided in the present embodiment may include: a list display module 901 and a list folding module 902, where the list display module 901 is configured to display a chat list in an unfolded state in the chat interface, wherein the chat list has at least one chat item displayed therein; and the list folding module 902 is configured to: in response to a first trigger operation for a first chat item in the chat list, display chat content of a first chat corresponding to the first chat item in the chat interface, and switch the chat list from the unfolded state to a folded state, where a display size of the chat list in the folded state is less than a display size of the chat list in the unfolded state.

In the chat list display apparatus provided in the present embodiment, the chat list is displayed by the list display module in the chat interface in the unfolded state, where the chat list has at least one chat item displayed therein; and in response to the first trigger operation for the first chat item in the chat list, the chat content of the first chat corresponding to the first chat item is displayed in the chat interface by the list folding module, and the chat list is switched by the list folding module from the unfolded state to the folded state, where the display size of the chat list in the folded state is less than the display size of the chat list in the unfolded state. In the present embodiment, by using the above technical solutions, when the chat content is displayed, the chat list is switched from the unfolded state to the folded state, so that the user can view the chat content of different chats by triggering the chat items in the chat list, and operations required for viewing the chat content of different chats or switching the user who performs the chat can be simplified without causing excessive occlusion to other content in the page, thereby improving the user experience.

In the above solution, the list folding module 902 may be configured to: display the chat content of the first chat corresponding to the first chat item in a first area of the chat interface.

In the above solution, the list folding module 902 may be configured to: control the chat list to move towards a second area of the chat interface, and switch the chat list from the unfolded state to the folded state during a moving process of the chat list.

In the above solution, the list folding module 902 may be further configured to: when the chat list moves to the second area, display the chat list in the folded state in the second area.

The chat list display apparatus provided in the present embodiment may further include: a list unfolding module, configured to: after switching the chat list from the unfolded state to the folded state, switch the chat list from the folded state to the unfolded state in response to an unfolding operation for the chat list.

In the above solution, the list unfolding module may be configured to: switch the chat list from the folded state to the unfolded state, and keep displaying a current chat content displayed in the chat interface, or switch the chat list from the folded state to the unfolded state, and cancel displaying a current chat content displayed in the chat interface.

The chat list display apparatus provided in the present embodiment may further include: a content display module, configured to: in response to a second trigger operation for a second chat item in the chat list, keep displaying the chat list, and display chat content of a second chat corresponding to the second chat item in the chat interface.

The chat list display apparatus provided in the present embodiment may further include: a display cancel module, configured to: in response to a display cancel operation for the chat list, cancel displaying the chat list, and keep displaying a current chat content displayed in the chat interface; and/or, a re-display module, configured to: in response to a list display operation for the chat list, re-display the chat list, and keep displaying a current chat content displayed in the chat interface.

In the above solution, the list display module 901 may be configured to: in response to a chat interface display operation acting on the media content presentation page, display the chat interface in the media content presentation page, and display the chat list in the unfolded state in the chat interface.

Optionally, when the chat list is in the unfolded state, a first chat identifier of a chat corresponding to the chat item, a second chat identifier, target chat information and sending time information of the target chat information may be displayed in the chat list; and when the chat list is in the folded state, only the first chat identifier of the chat corresponding to the chat item is displayed in the chat list.

The chat list display apparatus provided in the embodiments of the present disclosure may execute the chat list display method provided in any embodiment of the present disclosure, and has corresponding functional modules for executing the chat list display method. For technical details that not described in the present embodiment, reference may be made to the chat list display method provided in any embodiment of the present disclosure.

Referring to FIG. 10 below, it illustrates a structural schematic diagram of an electronic device 1000 (e.g, a computer device) suitable for implementing an embodiment of the present disclosure. The terminal device in the embodiment of the present disclosure may include, but is not limited to, mobile terminals such as mobile phones, notebook computers, digital broadcast receivers, personal digital assistants (PDAs), portable Android devices (PADs), portable media players (PMPs), in-vehicle terminals (e.g., in-vehicle navigation terminals), and the like, and fixed terminals such as digital TVs, desktop computers, etc. The electronic device shown in FIG. 10 is merely an example and should not bring any limitation to the functions and use ranges of the embodiments of the present disclosure.

As shown in FIG. 10, the electronic device 1000 may include a processing apparatus (e.g., a central processing unit, a graphics processing unit, or the like) 1001, which may execute various suitable actions and processing in accordance with a program stored in a read-only memory (ROM) 1002 or a program loaded from a storage apparatus 1008 into a random access memory (RAM) 1003. In the RAM 1003, various programs and data needed by the operations of the electronic device 1000 are also stored. The processing apparatus 1001, the ROM 1002 and the RAM 1003 are connected to each other via a bus 1004. An input/output (I/O) interface 1005 is also connected to the bus 1004.

In general, the following apparatuses may be connected to the I/O interface 1005: an input apparatus 1006, including, for example, a touch screen, a touch pad, a keyboard, a mouse, a camera, a microphone, an accelerometer, a gyroscope, and the like; an output apparatus 1007, including, for example, a liquid crystal display (LCD), a speaker, a vibrator, and the like; a storage apparatus 1008, including, for example, a magnetic tape, a hard disk, and the like; and a communication apparatus 1009. The communication apparatus 1009 may allow the electronic device 1000 to communicate in a wireless or wired manner with other devices to exchange data. Although FIG. 10 illustrates the electronic device 1000 having various apparatuses, it should be understood that not all illustrated apparatuses are required to be implemented or provided. More or fewer apparatuses may alternatively be implemented or provided.

According to the embodiments of the present disclosure, the processes described above with reference to the flowcharts may be implemented as computer software programs. For example, the embodiments of the present disclosure include a computer program product, which includes a computer program carried on a non-transitory computer-readable medium, and the computer program contains program codes for executing the method illustrated in the flowcharts. In such embodiments, the computer program may be downloaded and installed from a network via the communication apparatus 1009, or installed from the storage apparatus 1008, or installed from the ROM 1002. When the computer program is executed by the processing apparatus 1001, the above functions defined in the method of the embodiments of the present disclosure are executed.

It should be noted that, the computer-readable medium described above in the present disclosure may be either a computer-readable signal medium or a computer-readable storage medium, or any combination of the two. The computer-readable storage medium may be, for example, but is not limited to, electrical, magnetic, optical, electromagnetic, infrared, or semiconductor systems, apparatuses or devices, or a combination of any of the above. Examples of the computer-readable storage medium may include, but are not limited to: an electrical connection having one or more wires, a portable computer magnetic disk, a hard disk, an RAM, an ROM, an erasable programmable read-only memory (EPROM) or a flash memory, an optical fiber, a compact disc read-only memory (CD-ROM), an optical storage device, a magnetic storage device, or any suitable combination of the above. In the present disclosure, the computer-readable storage medium may be any tangible medium that contains or stores a program that may be used by or in combination with an instruction execution system, apparatus or device. In the present disclosure, the computer-readable signal medium may include a data signal that is propagated in a baseband or used as part of a carrier, wherein the data signal carries computer-readable program codes. Such propagated data signal may take many forms, including, but not limited to, electromagnetic signals, optical signals, or any suitable combination thereof. The computer-readable signal medium may also be any computer-readable medium other than the computer-readable storage medium, and the computer-readable signal medium may send, propagate or transmit the program for use by or in combination with the instruction execution system, apparatus or device. Program codes contained on the computer-readable medium may be transmitted with any suitable medium, including, but not limited to: an electrical wire, an optical cable, radio frequency (RF), and the like, or any suitable combination thereof.

In some implementations, a client and a server may perform communication by using any currently known or future-developed network protocol, such as a hypertext transfer protocol (HTTP), and may be interconnected with any form or medium of digital data communication (e.g., a communication network). Examples of the communication network include a local area network (LAN), a wide area network (WAN), an international network (e.g., the Internet), and a peer-to-peer network (e.g., an ad hoc peer-to-peer network), as well as any currently known or future-developed network.

The computer-readable medium may be contained in the above electronic device; and it may also be present separately and is not assembled into the electronic device.

The computer-readable medium carries one or more programs, and the one or more programs, when executed by the electronic device, cause the electronic device to: display a chat list in an unfolded state in a chat interface, where the chat list has at least one chat item displayed therein; and in response to a first trigger operation for a first chat item in the chat list, display chat content of a first chat corresponding to the first chat item in the chat interface, and switch the chat list from the unfolded state to a folded state, where a display size of the chat list in the folded state is less than a display size of the chat list in the unfolded state.

Computer program codes for executing the operations of the present disclosure may be written in one or more programming languages or combinations thereof. The programming languages include, but are not limited to, object-oriented programming languages, such as Java, Smalltalk, C++, and conventional procedural programming languages, such as the "C" language or similar programming languages. The program codes may be executed entirely on a user computer, executed partly on the user computer, executed as a stand-alone software package, executed partly on the user computer and partly on a remote computer, or executed entirely on the remote computer or a server. In the case involving the remote computer, the remote computer may be connected to the user computer through any type of network, including an LAN) or a WAN, or it may be connected to an external computer (e.g., through the Internet using an Internet service provider).

The flowcharts and block diagrams in the drawings illustrate system architectures, functions and operations of possible implementations of systems, methods and computer program products according to various embodiments of the present disclosure. In this regard, each block in the flowcharts or block diagrams may represent a part of a module, a program segment, or a code, which contains one or more executable instructions for implementing specified logical functions. It should also be noted that, in some alternative implementations, the functions annotated in the blocks may occur out of the sequence annotated in the drawings. For example, two blocks shown in succession may, in fact, be executed substantially in parallel, or the blocks may sometimes be executed in a reverse sequence, depending upon the functions involved. It should also be noted that each block in the block diagrams and/or flowcharts, and combinations of the blocks in the block diagrams and/or flowcharts may be implemented by dedicated hardware-based systems for executing specified functions or operations, or combinations of dedicated hardware and computer instructions.

The units involved in the described embodiments of the present disclosure may be implemented in a software or hardware manner. The names of the modules do not constitute limitations of the units themselves in a certain case.

The functions described herein above may be executed, at least in part, by one or more hardware logical components. For example, without limitation, example types of the hardware logical components that may be used include: a field programmable gate array (FPGA), an application specific integrated circuit (ASIC), an application specific standard product (ASSP), a system on chip (SOC), a complex programmable logic device (CPLD), and so on.

In the context of the present disclosure, a machine-readable medium may be a tangible medium, which may contain or store a program for use by or in combination with the instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses or devices, or any suitable combination thereof. More specific examples of the machine-readable storage medium would include an electrical connection based on one or more wires, a portable computer disk, a hard disk, an RAM, an ROM, an EPROM or a flash memory, an optical fiber, a CD-ROM, an optical storage device, a magnetic storage device, or any suitable combination thereof.

According to one or more embodiments of the present disclosure, Example 1 provides a chat list display method, including: displaying a chat list in an unfolded state in a chat interface, wherein the chat list has at least one chat item displayed therein; and in response to a first trigger operation for a first chat item in the chat list, displaying chat content of a first chat corresponding to the first chat item in the chat interface, and switching the chat list from the unfolded state to a folded state, where a display size of the chat list in the folded state is less than a display size of the chat list in the unfolded state.

According to one or more embodiments of the present disclosure, Example 2 illustrates the method according to Example 1, displaying the chat content of the first chat corresponding to the first chat item in the chat interface includes: displaying the chat content of the first chat corresponding to the first chat item in a first area of the chat interface.

According to one or more embodiments of the present disclosure, Example 3 illustrates the method according to Example 1, switching the chat list from the unfolded state to the folded state includes: controlling the chat list to move to a second area of the chat interface, and switching the chat list from the unfolded state to the folded state during a moving process of the chat list.

According to one or more embodiments of the present disclosure, Example 4 illustrates the method according to Example 3, further including: when the chat list moves to the second area, displaying the chat list in the folded state in the second area.

According to one or more embodiments of the present disclosure, Example 5 illustrates the method according to any of Examples 1-4, the method further includes: after switching the chat list from the unfolded state to the folded state, in response to an unfolding operation for the chat list, switching the chat list from the folded state to the unfolded state.

According to one or more embodiments of the present disclosure, Example 6 illustrates the method according to Example 5, switching the chat list from the folded state to the unfolded state includes: switching the chat list from the folded state to the unfolded state, and keeping displaying a current chat content displayed in the chat interface; or switching the chat list from the folded state to the unfolded state, and canceling displaying a current chat content displayed in the chat interface.

According to one or more embodiments of the present disclosure, Example 7 illustrates the method according to any of Examples 1-4, the method further includes: in response to a second trigger operation for a second chat item in the chat list, keeping displaying the chat list, and displaying chat content of a second chat corresponding to the second chat item in the chat interface.

According to one or more embodiments of the present disclosure, Example 8 illustrates the method according to any of Examples 1-4, the method further includes: in response to a display cancel operation for the chat list, canceling displaying the chat list, and keeping displaying a current chat content displayed in the chat interface; and/or, in response to a list display operation for the chat list, re-displaying the chat list, and keeping displaying a current chat content displayed in the chat interface.

According to one or more embodiments of the present disclosure, Example 9 illustrates the method according to any of Examples 1-4, displaying the chat list in the unfolded state in the chat interface includes: in response to a chat interface display operation acting on a media content presentation page, displaying the chat interface in the media content presentation page, and displaying the chat list in the unfolded state in the chat interface.

According to one or more embodiments of the present disclosure, Example 10 illustrates the method according to any of Examples 1-4, when the chat list is in the unfolded state, a first chat identifier of a chat corresponding to the chat item, a second chat identifier, target chat information and sending time information of the target chat information are displayed in the chat list; and when the chat list is in the folded state, only the first chat identifier of the chat corresponding to the chat item is displayed in the chat list.

According to one or more embodiments of the present disclosure, Example 11 provides a chat list display apparatus, including: a list display module, configured to display a chat list in an unfolded state in a chat interface, wherein the chat list has at least one chat item displayed therein; and a list folding module, configured to: in response to a first trigger operation for a first chat item in the chat list, display chat content of a first chat corresponding to the first chat item in the chat interface, and switch the chat list from the unfolded state to a folded state, wherein a display size of the chat list in the folded state is less than a display size of the chat list in the unfolded state.

According to one or more embodiments of the present disclosure, Example 12 provides an electronic device, including: one or more processors; and a memory, configured to store one or more programs, wherein when the one or more programs are executed by the one or more processors, the one or more processors are caused to implement the chat list display method according to the any of Examples 1-10.

According to one or more embodiments of the present disclosure, Example 13 provides a computer-readable storage medium, storing a computer program thereon, wherein the program, when executed by a processor, implements the chat list display method according to any of Examples 1-10.

What have been described above are only embodiments of the present disclosure and illustrations of the technical principles employed. It should be understood by those skilled in the art that, the disclosure scope involved in the preset disclosure is not limited to the technical solutions formed by specific combinations of the above technical features, and meanwhile should also include other technical solutions formed by any combinations of the above technical features or equivalent features thereof without departing from the concept of the disclosure, for example, technical solutions formed by mutual replacement of the above features with technical features having similar functions disclosed in the present disclosure (but is not limited to).

In addition, although various operations are described in a particular sequence, this should not be understood as requiring that these operations are executed in the particular sequence shown or in a sequential order. In certain environments, multitasking and parallel processing may be advantageous. Similarly, although several specific implementation details have been contained in the above discussion, some features that are described in the context of separate embodiments may also be implemented in combination in a single embodiment. Conversely, various features that are described in the context of a single embodiment may also be implemented in a plurality of embodiments separately or in any suitable sub-combination.

## Claims

1. A chat list display method, comprising:
displaying a chat list in an unfolded state in a chat interface, wherein the chat list has at least one chat item displayed therein; and
in response to a first trigger operation for a first chat item in the chat list, displaying chat content of a first chat corresponding to the first chat item in the chat interface, and switching the chat list from the unfolded state to a folded state, wherein a display size of the chat list in the folded state is less than a display size of the chat list in the unfolded state.

2. The method according to claim 1, wherein displaying the chat content of the first chat corresponding to the first chat item in the chat interface comprises:
displaying the chat content of the first chat corresponding to the first chat item in a first area of the chat interface.

3. The method according to claim 1, wherein switching the chat list from the unfolded state to the folded state comprises:
controlling the chat list to move to a second area of the chat interface, and switching the chat list from the unfolded state to the folded state during a moving process of the chat list.

4. The method according to claim 3, further comprising:
in response to the chat list moving to the second area, displaying the chat list in the folded state in the second area.

5. The method according to any of claims 1-4, wherein the method further comprises: after switching the chat list from the unfolded state to the folded state,
in response to an unfolding operation for the chat list, switching the chat list from the folded state to the unfolded state.

6. The method according to claim 5, wherein switching the chat list from the folded state to the unfolded state comprises:
switching the chat list from the folded state to the unfolded state, and keeping displaying a current chat content displayed in the chat interface; or
switching the chat list from the folded state to the unfolded state, and canceling displaying a current chat content displayed in the chat interface.

7. The method according to any of claims 1-4, further comprising:
in response to a second trigger operation for a second chat item in the chat list, keeping displaying the chat list, and displaying chat content of a second chat corresponding to the second chat item in the chat interface.

8. The method according to any of claims 1-4, further comprising at least one of the following:
in response to a display cancel operation for the chat list, canceling displaying the chat list, and keeping displaying a current chat content displayed in the chat interface; or
in response to a list display operation for the chat list, re-displaying the chat list, and keeping displaying a current chat content displayed in the chat interface.

9. The method according to any of claims 1-4, wherein displaying the chat list in the unfolded state in the chat interface comprises:
in response to a chat interface display operation acting on a media content presentation page, displaying the chat interface in the media content presentation page, and displaying the chat list in the unfolded state in the chat interface.

10. The method according to any of claims 1-4, wherein in response to the chat list being in the unfolded state, the chat list has a first chat identifier of a chat corresponding to the chat item, a second chat identifier, target chat information and sending time information of the target chat information displayed therein; and in response to the chat list being in the folded state, the chat list has only the first chat identifier of the chat corresponding to the chat item displayed therein.

11. A chat list display apparatus, comprising:
a list display module, configured to display a chat list in an unfolded state in a chat interface, wherein the chat list has at least one chat item displayed therein; and
a list folding module, configured to: in response to a first trigger operation for a first chat item in the chat list, display chat content of a first chat corresponding to the first chat item in the chat interface, and switch the chat list from the unfolded state to a folded state, wherein a display size of the chat list in the folded state is less than a display size of the chat list in the unfolded state.

12. An electronic device, comprising:
at least one processor; and
a memory in communication connection with the at least one processor,
wherein, the memory stores a computer program executable by the at least one program, and the computer program is executed by the at least one processor, to cause the at least one processor to execute the chat list display method according to any of claims 1-10.

13. A computer-readable storage medium having a computer program stored thereon, wherein the computer program is configured to cause a processor to implement the chat list display method according to any of claims 1-10.
